# EUROPEAN PATENT APPLICATION

(11) **EP 4 567 917 A1**
(43) Date of publication of application: **11.06.2025**
(21) Application number: 24214813.8
(22) Date of filing: 22.11.2024
(51) Int. Cl.: H01M 4/131, H01M 4/1391, H01M 4/36, H01M 4/525, H01M 10/0525

(54) **POSITIVE ELECTRODES FOR RECHARGEABLE LITHIUM BATTERIES AND RECHARGEABLE LITHIUM BATTERIES INCLUDING THE SAME**

(30) Priority: 28.11.2023 KR 20230168372
(71) Applicant: SAMSUNG SDI CO., LTD., Yongin-si, Gyeonggi-do 17084 (KR)
(72) Inventor: KIM, Jinhwa, 17084 Yongin-si (KR); KIM, Minhan, 17084 Yongin-si (KR); LEE, Soonrewl, 17084 Yongin-si (KR); SEOG, Jihyun, 17084 Yongin-si (KR)
(74) Representative: Marks & Clerk LLP

(57) **Abstract**

A positive electrode active material includes a first positive electrode active material including a first lithium nickel-cobalt-based composite oxide, in a form of secondary particles composed of a plurality of primary particles, and having an average particle diameter (D₅₀) of the secondary particles of about 10 µm to about 30 µm; a second positive electrode active material including a second lithium nickel-cobalt-based composite oxide, in a form of secondary particles composed of a plurality of primary particles, and having an average particle diameter (D₅₀) of the secondary particles of about 5 µm to about 9 µm; and a third positive electrode active material including a third lithium nickel-cobalt-based composite oxide, in a form of single particles, and having an average particle diameter (D₅₀) of the single particles of about 0.5 µm to about 4 µm; wherein the positive electrode active material satisfies Relationship Equation 1. Relationship Equation 1
Co²>Co¹>Co³.

## Description

### BACKGROUND

### 1. Field

One or more aspects of embodiments of the present disclosure are directed toward positive electrodes for rechargeable lithium batteries and rechargeable lithium batteries including the positive electrode.

### (b) Description of the Related Art

A portable information device such as a cell phone, a laptop, smart phone, and/or the like and/or an electric vehicle may use a rechargeable lithium battery having relatively high energy density and relatively easy portability as a driving power source. Recently, research has been actively conducted for the application of a rechargeable lithium battery with high energy density as a driving power source and/or power storage power source for hybrid and/or electric vehicles (automotive battery), and/or as a power storage power source for energy storage systems (ESS) or power walls.

Various positive electrode active materials have been investigated to realize rechargeable lithium batteries for application to the above-described uses. For example, lithium nickel-based oxide, lithium nickel-cobalt-based composite oxide, lithium cobalt-based oxide, and lithium nickel-manganese-based composite oxide are often used as positive electrode active materials.

Among them, lithium nickel-cobalt-based composite oxide is considered to be structurally stable while realizing high capacity, which is advantageous for realizing long cycle-life characteristics. Lithium nickel-cobalt-based composite oxide can also realize suitably (or desirably) high energy density, and thus there has been recent focus on including lithium nickel-cobalt-based composite oxide in products requiring (or desiring) high capacity and high energy density.

### SUMMARY

One or more aspects of embodiments of the present disclosure are directed toward a positive electrode for rechargeable lithium batteries to prevent or reduce deterioration of rechargeable lithium batteries and achieve suitably long cycle-life. Additional aspects will be set forth in part in the description which follows and, in part, will be apparent from the description, or may be learned by practice of the presented embodiments of the disclosure.

In one or more embodiments, a positive electrode active material (e.g., for a rechargeable lithium battery) includes a first positive electrode active material including a first lithium nickel-cobalt-based composite oxide, the first lithium nickel-cobalt-based composite oxide being in a form of secondary particles composed of a plurality of primary particles and having an average particle diameter (D₅₀) of the secondary particles of about 10 µm to about 30 µm; a second positive electrode active material including a second lithium nickel-cobalt-based composite oxide, the second lithium nickel-cobalt-based composite oxide being in a form of secondary particles composed of a plurality of primary particles and having an average particle diameter (D₅₀) of the secondary particles of about 5 µm to about 9 µm; and a third positive electrode active material including a third lithium nickel-cobalt-based composite oxide, the third lithium nickel-cobalt-based composite oxide being in a form of single particles and having an average particle diameter (D₅₀) of the single particles of about 0.5 µm to about 4 µm; wherein the positive electrode active material satisfies Relationship Equation 1:

**Relationship Equation 1** Co²>Co¹>Co³,

wherein, in Relationship Equation 1, Co¹ is a mol% content (e.g., amount) of cobalt based on 100 mol% of metals excluding lithium in the first lithium nickel-cobalt-based composite oxide, Co² is a mol% content (e.g., amount) of cobalt based on 100 mol% of metals excluding lithium in the second lithium nickel-cobalt-based composite oxide, and Co³ is a mol% content (e.g., amount) of cobalt based on 100 mol% of metals excluding lithium in the third lithium nickel-cobalt-based composite oxide.

In one or more embodiments, a positive electrode (e.g., for a rechargeable lithium battery) includes a positive electrode current collector, and a positive electrode active material layer on the positive electrode current collector, wherein the positive electrode active material layer includes the positive electrode active material.

In one or more embodiments, a rechargeable lithium battery includes the positive electrode; a negative electrode; and an electrolyte solution.

In one or more embodiments, a method of manufacturing a positive electrode (e.g., for a rechargeable lithium battery) includes preparing a composition including about 60 to about 90 wt% of a first positive electrode active material, about 5 to about 20 wt% of a second positive electrode active material, and about 5 to about 20 wt% of a third positive electrode active material composition based on a total of 100 wt% of the first, second, and third positive electrode active materials; coating the composition on a current collector; and drying and then compressing; wherein the first positive electrode active material includes a first lithium nickel-cobalt-based composite oxide, the first lithium nickel-cobalt-based composite oxide being in a form of secondary particles composed of a plurality of primary particles and having an average particle diameter (D₅₀) of the secondary particles of about 10 µm to about 30 µm, the second positive electrode active material includes a second lithium nickel-cobalt-based composite oxide, the second lithium nickel-cobalt-based composite oxide being in a form of secondary particles composed of a plurality of primary particles and having an average particle diameter (D₅₀) of the secondary particles of about 5 µm to about 9 µm, the third positive electrode active material includes a third lithium nickel-cobalt-based composite oxide, the third lithium nickel-cobalt-based composite oxide being in a form of single particles and having an average particle diameter (D₅₀) of the single particles of about 0.5 µm to about 4 µm, and the positive electrode active material satisfies Relationship Equation 1:

**Relationship Equation 1** Co²>Co¹>Co³,

in Relationship Equation 1, Co¹ is a mol% content (e.g., amount) of cobalt based on 100 mol% of metals excluding lithium in the first lithium nickel-cobalt-based composite oxide, Co² is a mol% content (e.g., amount) of cobalt based on 100 mol% of metals excluding lithium in the second lithium nickel-cobalt-based composite oxide, and Co³ is a mol% content (e.g., amount) of cobalt based on 100 mol% of metals excluding lithium in the third lithium nickel-cobalt-based composite oxide.

At least some of the above and other features of the invention are set out in the claims.

The positive electrode according to one or more embodiments realizes suitably high capacity and energy density while effectively or suitably preventing or reducing deterioration during the cycle-life of the battery, thus enabling long (or improved) cycle-life.

### BRIEF DESCRIPTION OF THE DRAWINGS

FIGS. 1-4 are schematic views each schematically showing a rechargeable lithium battery according to one or more embodiments.
FIG. 5 is a TXM (Transmission X-ray Microscopy) analysis of the cross-section of the positive electrode of Example 1.
FIG. 6 is a TXM analysis of the cross-section of the positive electrode of Comparative Example 1.
FIG. 7 is a TXM analysis of the cross-section of the positive electrode of Comparative Example 3.
FIG. 8 is a TXM analysis of the cross-section of the positive electrode of Comparative Example 4.

### DETAILED DESCRIPTION

Hereinafter, example embodiments will be described in more detail so that those of ordinary skill in the art can easily implement them. However, this disclosure may be embodied in many different forms and is not construed as limited to the example embodiments set forth herein.

The terminology used herein is used to describe embodiments only, and is not intended to limit the disclosure. The singular expression includes the plural expression unless the context clearly dictates otherwise.

As used herein, "combination thereof" refers to a mixture, a stack, a composite, a copolymer, an alloy, a blend, a reaction product, and/or the like of the constituents.

Herein, it should be understood that terms such as "comprises," "includes," and/or "have" are intended to designate the presence of an embodied feature, number, step (e.g., act or task), element, and/or a (e.g., any suitable) combination thereof, but it does not preclude the possibility of the presence or addition of one or more other feature(s), number(s), step(s) (e.g., act or task), element(s), and/or a combination thereof.

In the drawings, the thickness of layers, films, panels, regions, and/or the like are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

"Layer" herein includes not only a shape formed on the whole surface if (e.g., when) viewed from a plan view, but also a shape formed on a partial surface. Further, in this specification, the phrase "on a plane," or "plan view," means viewing a target portion from the top, and the phrase "on a cross-section" means viewing a cross-section formed by vertically cutting a target portion from the side.

The average particle diameter may be measured by any suitable method understood by those skilled in the art, for example, by a particle size analyzer, by a transmission electron microscope image, and/or a scanning electron microscope image. In one or more embodiments, it is possible to obtain an average particle diameter value by measuring using a dynamic light scattering method, performing data analysis, counting the number of particles for each particle size range, and calculating from this. Unless otherwise defined, the average particle diameter may refer to the diameter (D₅₀) of particles having a cumulative volume of 50 volume% in the particle size distribution. In the present specification, when particles are spherical, "diameter" indicates an average particle diameter, and when the particles are non-spherical, the "diameter" indicates a major axis length. As used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

It will be understood that, although the terms first, second, etc. may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, ±20%, ±10%, ±5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

### Positive Electrode

In one or more embodiments, a positive electrode for a rechargeable lithium battery includes a positive electrode current collector, and a positive electrode active material layer on the positive electrode current collector, wherein the positive electrode active material layer includes a first positive electrode active material including a first lithium nickel-cobalt-based composite oxide, in a form of secondary particles composed of a plurality of primary particles, and having an average particle diameter (D₅₀) of the secondary particles of about 10 µm to about 30 µm; a second positive electrode active material including a second lithium nickel-cobalt-based composite oxide, in a form of secondary particles composed of a plurality of primary particles, and having an average particle diameter (D₅₀) of the secondary particles of about 5 µm to about 9 µm; and a third positive electrode active material including a third lithium nickel-cobalt-based composite oxide, in a form of single particles, and having an average particle diameter (D₅₀) of the single particles of about 0.5 µm to about 4 µm; wherein the positive electrode active material satisfies Relationship Equation 1:

**Relationship Equation 1** Co²>Co¹>Co³,

wherein, in Relationship Equation 1, Co¹ is a mol% content (e.g., amount) of cobalt based on 100 mol% of metals excluding lithium in the first lithium nickel-cobalt-based composite oxide, Co² is a mol% content (e.g., amount) of cobalt based on 100 mol% of metals excluding lithium in the second lithium nickel-cobalt-based composite oxide, and Co³ is a mol% content (e.g., amount) of cobalt based on 100 mol% of metals excluding lithium in the third lithium nickel-cobalt-based composite oxide.

In a positive electrode active material including the lithium nickel-cobalt-based composite oxide, a design of mixing large particles in the form of secondary particles and small particles in the form of single particles to maximize or increase capacity and energy density and realize long or improved cycle-life characteristics has been proposed. However, because the large particles in the form of secondary particles and the small particles in the form of single particles have a difference in kinetic behaviors, which may accelerate the deterioration of the large particles as charging and discharging of the battery are repeated, there is a potential problem of deteriorating cycle-life characteristics. Accordingly, one or more embodiments of the present disclosure propose a design of effectively or suitably suppressing or reducing the accelerated deterioration of the large particles by using middle (e.g., middle-size) particles in the form of secondary particles, as well as the large particles in the form of secondary particles and the small particles in the form of single particles, to secure (or improve) kinetic balance and thereby, improve cycle-life characteristics and concurrently (e.g., simultaneously), maintain suitably high capacity and energy density.

### Positive Electrode Active Material Layer

The positive electrode active material layer includes a first positive electrode active material, a second positive electrode active material, and a third positive electrode active material, each including lithium nickel-cobalt-based composite oxide. Additionally, the positive electrode active material layer may further include other types (kinds) of positive electrode active materials, and may optionally further include a binder and/or a conductive material.

The first positive electrode active material is in the form of secondary particles composed of (e.g., each composed of) a plurality of primary particles, and the average particle diameter (D₅₀) of the secondary particles is about 10 µm to about 30 µm, for example, about 11 µm to about 29 µm, about 12 µm to about 28 µm, about 13 µm to about 27 µm, about 14 µm to about 26 µm, or about 15 µm to about 25 µm, and may be expressed (e.g., may exist) as large particles. When the average particle diameter of the secondary particles satisfies any of the above ranges, suitably high capacity and suitably high energy density may be realized. Herein, the average particle diameter (D₅₀) of the secondary particles refers to a diameter of particles having a cumulative volume of 50 volume% in the particle size distribution that is obtained by measuring the size (diameter or major axis length) of about 20 particles at random in a scanning electron microscope image.

The primary particles may be spherical, ellipsoidal, plate-shaped, or irregularly shaped. The average particle size of the primary particles may be about 50 nm to about 2 µm, about 100 nm to about 1 µm, about 150 nm to about 800 nm, or about 200 nm to about 500 nm. The average particle size of the primary particles may be calculated by measuring the sizes of about 20 primary particles in a SEM image of a cross-section of a secondary particle and calculating the arithmetic mean. The average particle size of the primary particles may refer to the diameter, the length of the major axis, or the length of the plate.

The second positive electrode active material is in the form of secondary particles composed of (e.g., each composed of) a plurality of primary particles, and the average particle diameter (D₅₀) of the secondary particles is about 5 µm to about 9 µm, for example, about 5.2 µm to about 8.8 µm, about 5.4 µm to about 8.6 µm, about 5.6 µm to about 8.4 µm, about 5.8 µm to about 8.2 µm, or about 6 µm to about 8 µm, and may be expressed (e.g., may exist) as middle particles (e.g., middle-size particles). When the average particle diameter of the secondary particles satisfies any of the above ranges, suitably high capacity and suitably high energy density may be realized and at the same time (e.g., concurrently or simultaneously), deterioration of the large particles can be alleviated or reduced. Herein, the average particle diameter (D₅₀) of the secondary particles refers to a diameter of particles having a cumulative volume of 50 volume% in the particle size distribution that is obtained by measuring the size (diameter or major axis length) of about 20 particles at random in a scanning electron microscope image.

The primary particles may be spherical, ellipsoidal, plate-shaped, or irregularly shaped. The average particle size of the primary particles may be about 50 nm to about 2 µm, about 100 nm to about 1 µm, about 150 nm to about 800 nm, or about 200 nm to about 500 nm. The average particle size of the primary particles may be calculated by measuring the sizes of about 20 primary particles in a SEM image of a cross-section of a secondary particle and calculating the arithmetic mean. The average particle size of the primary particles may refer to the diameter, the length of the major axis, or the length of the plate.

The third positive electrode active material is in the form of a single particle (e.g., a monolithic or elementary particle), and the average particle diameter (D₅₀) of the single particle (e.g., an average particle diameter (D₅₀) of a plurality of single particles including the single particle) is about 0.5 µm to about 4 µm, for example, about 0.6 µm to about 3.8 µm, about 0.7 µm to about 3.6 µm, about 0.8 µm to about 3.4 µm, about 0.9 µm to about 3.2 µm, or about 1 µm to about 3 µm, and may be expressed (e.g., may exist) as small particles. When the average particle diameter of the elementary (e.g., single or monolithic) particles satisfies any of the above ranges, the energy density of the positive electrode can be maximized or increased and deterioration of the large particles may be alleviated or reduced. Herein, the average particle diameter (D₅₀) of the single particles refers to a diameter of particles having a cumulative volume of 50 volume% in the particle size distribution that is obtained by measuring the size (diameter or major axis length) of about 20 particles at random in a scanning electron microscope image.

In the positive electrode active material layer, the first positive electrode active material may be included in an amount of about 60 to about 90 wt%, for example, about 63 wt% to about 89 wt%, about 66 wt% to about 88 wt%, about 67 wt% to about 73 wt%, about 69 wt% to about 87 wt%, about 72 wt% to about 86 wt%, or about 75 wt% to about 85 wt%, based on a total of 100 wt% of the first, second, and third positive electrode active materials. In one or more embodiments, in the positive electrode active material layer, the second positive electrode active material may be included in an amount of about 5 to about 20 wt%, for example, about 6 wt% to about 20 wt%, about 7 wt% to about 20 wt%, about 8 wt% to about 20 wt%, about 8 wt% to about 12 wt%, about 9 wt% to about 20 wt%, or about 10 wt% to about 20 wt%, based on a total of 100 wt% of the first, second, and third positive electrode active materials. In one or more embodiments, in the positive electrode active material layer, the third positive electrode active material may be included in an amount of about 5 to about 20 wt%, for example, about 6 wt% to about 20 wt%, about 7 wt% to about 20 wt%, about 8 wt% to about 20 wt%, about 9 wt% to about 20 wt%, or about 10 wt% to about 20 wt%, based on a total of 100 wt% of the first, second, and third positive electrode active materials. If the contents of the first, second, and third positive electrode active materials in the positive electrode active material layer respectively satisfy any of their respective above ranges, the problem of accelerated deterioration of the large particles during the charging and discharging process may be suppressed or reduced, and cycle-life characteristics may be improved, and suitably high capacity and suitably high energy density may be maintained.

The lithium nickel-cobalt-based composite oxides of the first, second, and third positive electrode active materials may be the same or different from each other, and may each independently be represented by Chemical Formula 1:

**Chemical Formula 1** Liₐ₁Niₓ₁Co_{y1}M¹_{z1}M²_{w1}O_{2-b1}X_{b1}.

In Chemical Formula 1, 0.9≤a1 ≤1.2, 0.3≤x1 ≤0.98, 0.01 ≤y1 ≤0.69, 0.01≤z1 ≤ 0.69, 0≤w1≤0.69, 0.9≤x1+y1+z1+w1≤1.1, and 0≤b1 ≤0.1, M¹ is Al, Mn, and/or a combination thereof, M² is one or more elements selected from among B, Ba, Ca, Ce, Cr, Cu, Fe, Mg, Mo, Nb, Si, Sn, Sr, Ti, V, W, and Zr, and X is one or more elements selected from among F, P, and S.

In Chemical Formula 1, for example, 0.4≤x1 ≤0.98, 0.01 ≤y1 ≤0.59, 0.01≤z1 ≤ 0.59, and 0≤w1 ≤0.59; 0.5≤x1 ≤0.98, 0.01 ≤y1 ≤0.49, 0.01 ≤z1 ≤0.49, and 0≤w1 ≤0.49; 0.6≤x1 ≤0.98, 0.01 ≤y1 ≤0.39, 0.01 ≤z1 ≤0.39, and 0≤w1 ≤0.39; 0.7≤x1≤0.98, 0.01 ≤y1 ≤ 0.29, 0.01 ≤z1 ≤0.29, and 0≤w1 ≤0.29; 0.8≤x1 ≤0.98, 0.01 ≤y1 ≤0.19, 0.01 ≤z1 ≤0.19, and 0≤w1 ≤0.19; or 0.9≤x1 ≤0.98, 0.01 ≤y1 ≤0.09, 0.01 ≤z1 ≤0.09, and 0≤w1 ≤0.09.

The mol% content (e.g., amount) of cobalt based on 100 mol% of metals excluding lithium in the second lithium nickel-cobalt-based composite oxide may be larger, for example, about 1.1 times to about 2 times, about 1.1 times to about 1.8 times, or about 1.2 times to about 1.6 times larger than the mol% content (e.g., amount) of cobalt based on 100 mol% of metals excluding lithium in first lithium nickel-cobalt-based composite oxide. In one or more embodiments, the mol% content (e.g., amount) of cobalt based on 100 mol% of metals excluding lithium in the first lithium nickel-cobalt-based composite oxide may be larger, for example, about 1.1 times to about 3 times, about 1.1 times to about 2.5 times, or about 1.2 times to about 2.5 times larger than the mol% of cobalt based on 100 mol% of metals excluding lithium in the third lithium nickel-cobalt-based composite oxide. The higher the cobalt content (e.g., amount), the higher the capacity can be achieved, but more side reactions with the electrolyte may also occur, and/or problems such as breakage and/or deterioration of the large particles during its cycle-life (e.g., during the cycle-life of the battery) may occur. However, according to the positive electrode design of one or more embodiments, because the cobalt content (e.g., amount) of the second lithium nickel-cobalt-based composite oxide, that is of the middle (middle-size) particles, is the largest, and the cobalt content (e.g., amount) of the third lithium nickel-cobalt-based composite oxide, that is of the small particles, is the lowest, problems with the large particles being damaged during charging and discharging and problems with accelerated deterioration of the large particles may be prevented or reduced, and a kinetic balance between lithium ions and electrons may be formed to improve cycle-life characteristics of rechargeable lithium batteries.

In the first lithium nickel-cobalt-based composite oxide, the mol% content (e.g., amount) of cobalt based on 100 mol% of metals excluding lithium may be about 5 mol% to about 20 mol%, for example, about 6 mol% to about 20 mol%, about 7 mol% to about 20 mol%, about 8 mol% to about 20 mol%, about 9 mol% to about 20 mol%, or about 10 mol% to about 20 mol%

In one or more embodiments, in the second lithium nickel-cobalt-based composite oxide, the mol% content (e.g., amount) of cobalt based on 100 mol% of metals excluding lithium may be about 10 mol% to about 30 mol%, for example, about 11 mol% to about 29 mol%, about 12 mol% to about 28 mol%, about 13 mol% to about 27 mol%, about 14 mol% to about 26 mol%, or about 15 mol% to about 25 mol%. In one or more embodiments, in the third lithium nickel-cobalt-based composite oxide, the mol% content (e.g., amount) of cobalt based on 100 mol% of metals excluding lithium may be about 1 mol% to about 15 mol%, for example, about 2 mol% to about 15 mol%, about 3 mol% to about 15 mol%, about 3 mol% to about 15 mol%, about 4 mol% to about 15 mol%, or about 5 mol% to about 15 mol%. When the mol% content (e.g., amount) of cobalt based on 100 mol% of metals excluding lithium in the first, second and third lithium nickel-cobalt-based composite oxides satisfies any of the above respective ranges, damage to the large particles during the compression process is effectively or suitably suppressed or reduced, thus preventing or reducing accelerated deterioration of the large particles during charging and discharging, and a kinetic balance between lithium ions and electrons is formed to improve cycle-life characteristics of rechargeable lithium batteries.

In the positive electrode active material layer, the mol% content (e.g., amount) of cobalt based on 100 mol% of metals excluding lithium in the second lithium nickel-cobalt based composite oxide may be about 1 mol% to about 10 mol% more than, for example, about 2 mol% to about 9 mol%, about 3 mol% to about 8 mol%, or about 4 mol% to about 7 mol% more than the mol% content (e.g., amount) of cobalt based on 100 mol% of metals excluding lithium in the first lithium nickel-cobalt based composite oxide. In one or more embodiments, the mol% content (e.g., amount) of cobalt based on 100 mol% of metals excluding lithium in the first lithium nickel-cobalt based composite oxide may be about 1 mol% to about 10 mol% more than, for example, about 2 mol% to about 9 mol%, about 3 mol% to about 8 mol%, or about 4 mol% to about 7 mol% more than the mol% content (e.g., amount) of cobalt based on 100 mol% of metals excluding lithium in the third lithium nickel-cobalt based composite oxide. When the difference in mol% content (e.g., amount) of cobalt with respect to 100 mol% of metals other than lithium in the lithium nickel-cobalt-based composite oxide satisfies any of the above ranges, accelerated deterioration of the large particles during charging and discharging may be prevented or reduced, and a kinetic balance between lithium ions and electrons may be formed to improve cycle-life characteristics of rechargeable lithium batteries.

The positive electrode active material layer may have a density of about 3.4 g/cc to about 3.9 g/cc, for example, about 3.5 g/cc to about 3.8 g/cc, or about 3.6 g/cc to about 3.7 g/cc. The density of the positive electrode active material layer refers to density of the positive electrode in a compressed state. If the density of the positive electrode active material layer satisfies any of the above ranges, very (substantially or suitably) high energy density and suitably high capacity may be realized. In comparable positive electrodes having such a high density, a problem may occur in which particles in the form of particles (e.g. secondary particles) are broken or damaged due to repeated charging and discharging. However, according to the positive electrode design of one or more embodiments, very (substantially or suitably) high density may not only be realized, but also the damage of the large particles may be effectively or suitably suppressed or reduced.

For example, a cracked (e.g., unsuitable) first positive electrode active material may be (e.g., may constitute) about 0 to about 30 number%, for example, about 1 number% to about 20 number%, or about 3 number% to about 10 number% of the total first positive electrode active material in the positive electrode active material layer. This may refer to number% (e.g., a percentage) that even a portion of the first positive electrode active material that is cracked constitutes based on (e.g., relative to) 100 number% (e.g., total amount) of the first positive electrode active material in the positive electrode active material layer. Whether or not the first positive electrode active material is cracked, and a crack occurrence rate, may be measured through an SEM and/or TEM (transmission electron microscopy) image on a cross-section of the positive electrode. If the percentage of the cracked first positive electrode active material out of the total first positive electrode active material in the positive electrode active material layer satisfies any of the above ranges, the problem of the large particles being deteriorated due to the repeated charges and discharges may be effectively or suitably prevented or reduced, thus improving cycle-life characteristics of the battery.

If the large particles in the positive electrode active material layer are damaged during the compression, nickel ions may be reduced (e.g., through a reduction reaction), for example, Ni⁴⁺ ions may be reduced to Ni³⁺ ions. In one or more embodiments, because the large particle damage in the positive electrode active material layer is suppressed or reduced, which decreases the nickel reduction, a portion occupied by Ni³⁺ may be, for example, about 1 area% to about 30 area%, for example, about 3 area% to about 20 area%, or about 5 area% to about 10 area%, based on 100 area% of a total area of the cross-section of the positive electrode active material. This may be measured through TXM (Transmission X-ray Microscopy) analysis on the cross-section of the positive electrode after the compression or the formation process. If a ratio of Ni³⁺ area in the cross-section of the positive electrode active material satisfies any of the above ranges, the problem of the large particles being deteriorated due to the repeated charges and discharges may be effectively or suitably prevented or reduced, thus improving cycle-life characteristics of the rechargeable lithium battery including the positive electrode.

In one or more embodiments, a total thickness of the positive electrode active material layer may be about 10 µm to about 200 µm, for example, about 10 µm to about 180 µm, about 10 µm to about 160 µm, about 20 µm to about 160 µm, about 20 µm to about 140 µm, about 20 µm to about 120 µm, about 30 µm to about 120 µm, or about 30 µm to about 100 µm. If the total thickness of the positive electrode active material layer satisfies any of the above ranges, suitably high capacity can be achieved, and the problem of large particles deterioration due to repeated charging and discharging can be effectively or suitably prevented or reduced, thereby improving cycle-life characteristics of the battery.

### Binder

The binder according to one or more embodiments serves to adhere the positive electrode active material particles to each other and also to adhere the positive electrode active material to the current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

### Conductive Material

The conductive material (e.g., electron conductor) according to one or more embodiments is included to provide (or improve) electrode conductivity and any suitable electrically conductive material may be used as a conductive material unless it causes an undesirable chemical change in the battery. Examples of the conductive material may include a carbon-based material such as natural graphite, artificial graphite, carbon black, acetylene black, ketjen black, a carbon fiber, a carbon nanofiber, a carbon nanotube, and/and/or the like; a metal-based material of a metal powder and/or a metal fiber including copper, nickel, aluminium, silver, and/or the like; a conductive polymer such as a polyphenylene derivative; and/or a mixture thereof.

Based on 100 wt% of the positive electrode active material layer, the content (e.g., amount) of the positive electrode active material may be about 90 wt% to about 99.8 wt%, or about 95 wt% to about 99 wt%, and the content (e.g., amount) of the binder and the content (e.g., amount) of the conductive material may be about 0.1 wt% to about 5 wt% (of the binder), and about 0.5 wt% to about 2.5 wt% (of the conductive material), respectively.

### Current Collector

The positive electrode current collector according to one or more embodiments is not particularly limited as long as it is conductive without causing undesirable chemical changes in the rechargeable lithium battery, but specific examples may include aluminium (Al), stainless steel (SUS), indium (In), magnesium (Mg), titanium (Ti), iron (Fe), cobalt (Co), nickel (Ni), zinc (Zn), germanium (Ge), lithium (Li), and combinations thereof, and, for example, it may include aluminium (Al). Herein, the shape of the current collector may be plate-shaped and/or thin-shaped.

### Method of Manufacturing Positive Electrode

In one or more embodiments, a method of manufacturing a positive electrode for a rechargeable lithium battery includes preparing a composition including about 60 to about 90 wt% of a first positive electrode active material, about 5 to about 20 wt% of a second positive electrode active material, and about 5 to about 20 wt% of a third positive electrode active material based on a total of 100 wt% of the first, second, and third positive electrode active materials; coating the composition on a current collector; and drying and then compressing the coated current collector; wherein the first positive electrode active material includes a first lithium nickel-cobalt-based composite oxide, is in a form of secondary particles composed of a plurality of primary particles, and has an average particle diameter (D₅₀) of the secondary particles of about 10 µm to about 30 µm, the second positive electrode active material includes a second lithium nickel-cobalt-based composite oxide, is in a form of secondary particles composed of a plurality of primary particles, and has an average particle diameter (D₅₀) of the secondary particles of about 5 µm to about 9 µm, the third positive electrode active material includes a third lithium nickel-cobalt-based composite oxide, is in a form of single particles, and has an average particle diameter (D₅₀) of the single particles of about 0.5 µm to about 4 µm, and the positive electrode active material satisfies Relationship Equation 1:

**Relationship Equation 1** Co²>Co¹>Co³,

wherein, in Relationship Equation 1, Co¹ is a mol% content (e.g., amount) of cobalt based on 100 mol% of metals excluding lithium in the first lithium nickel-cobalt-based composite oxide, Co² is a mol% content (e.g., amount) of cobalt based on 100 mol% of metals excluding lithium in the second lithium nickel-cobalt-based composite oxide, and Co³ is a mol% content (e.g., amount) of cobalt based on 100 mol% of metals excluding lithium in the third lithium nickel-cobalt-based composite oxide.

The positive electrode of the present embodiments may be manufactured through the above method. Because the details of the first positive electrode active material, second positive electrode active material, and third positive electrode active material may each independently be the same as described above, duplicative descriptions thereof are not provided.

The composition includes the first positive electrode active material, the second positive electrode active material, and the third positive electrode active material, and may optionally include a binder and/or a conductive material. The composition includes about 60 wt% to about 90 wt%, for example, about 63 wt% to about 89 wt%, about 66 wt% to about 88 wt%, about 69 wt% to about 87 wt%, about 72 wt% to about 86 wt%, or about 75 wt% to about 85 wt% of the first positive electrode active material based on a total of 100 wt% of the first, second, and third positive electrode active materials. In one or more embodiments, the composition includes about 5 wt% to about 20 wt%, for example, about 6 wt% to about 20 wt%, about 7 wt% to about 20 wt%, about 8 wt% to about 20 wt%, about 9 wt% to about 20 wt%, or about 10 wt% to about 20 wt% of the second positive electrode active material based on a total of 100 wt% of the first, second, and third positive electrode active materials. In one or more embodiments, the composition includes about 5 wt% to about 20 wt%, for example, about 6 wt% to about 20 wt%, about 7 wt% to about 20 wt%, about 8 wt% to about 20 wt%, about 9 wt% to about 20 wt%, or about 10 wt% to about 20 wt% of the third positive electrode active material based on a total of 100 wt% of the first, second, and third positive electrode active materials. If the contents of the first positive electrode active material, the second positive electrode active material, and the third positive electrode active material in the composition respectively satisfy the above ranges, the problem of accelerated deterioration of the large particles during charging and discharging may be suppressed or reduced, thereby improving cycle-life characteristics and maintaining suitably high capacity and suitably high energy density.

The compression step (e.g., act or task) may be to compress the positive electrode to have final density of about 3.4 g/cc to about 3.9 g/cc, for example, about 3.5 g/cc to about 3.8 g/cc, or about 3.6 g/cc to about 3.7 g/cc. Such a compression with suitably high strength may realize a battery with very (substantially or suitably) high energy density and high capacity. However, there may be the problem that the large particles in the form of secondary particles may be broken, but according to one or more embodiments, the compositions may be appropriately or suitably adjusted to effectively or suitably suppress or reduce the damage on the large particles, thereby, realizing high energy density and improving cycle-life characteristics at the same time.

### Rechargeable Lithium Battery

In one or more embodiments, the rechargeable lithium battery includes the positive electrode; a negative electrode; and an electrolyte. Herein, the electrolyte may be a liquid electrolyte or a solid electrolyte.

For example, in one or more embodiments, a rechargeable lithium battery includes the positive electrode according to the present embodiments, a negative electrode, a separator between the positive electrode and the negative electrode, and an electrolyte solution. As another example, an all-solid-state rechargeable battery includes the positive electrode according to the present embodiments, a negative electrode, and a solid electrolyte layer between the positive electrode and the negative electrode.

Hereinafter, a rechargeable lithium battery using an electrolyte solution will be described as an example.

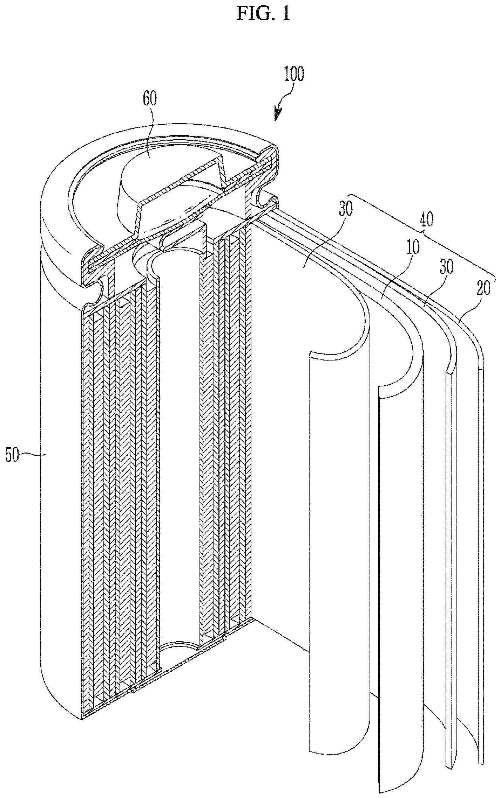

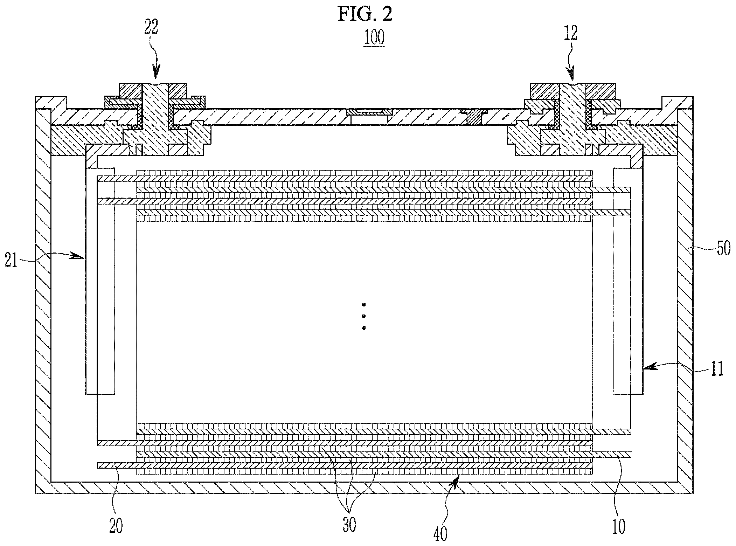

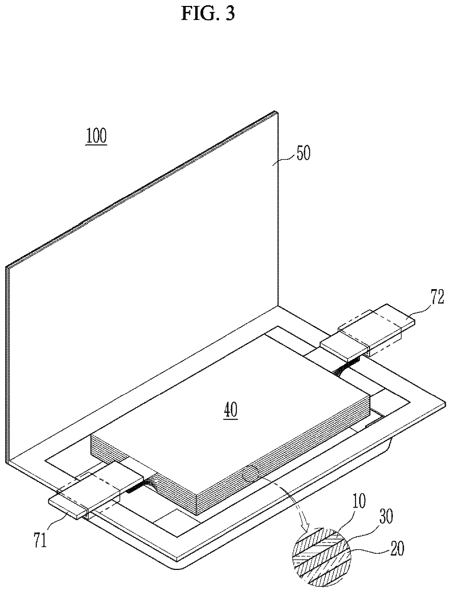

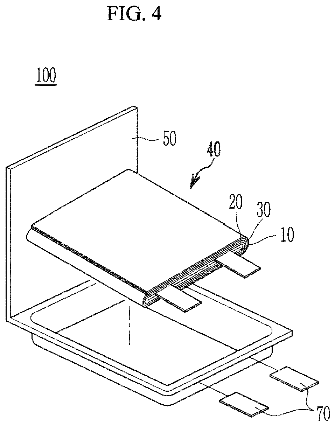

The rechargeable lithium battery may be classified into cylindrical, prismatic, pouch, coin, and/or the like depending on the shape. FIGS. 1 to 4 are schematic diagrams each showing a rechargeable lithium battery according to one or more embodiments, where FIG. 1 is a cylindrical battery, FIG. 2 is a prismatic battery, and FIGS. 3 and 4 are each a pouch-shaped battery. Referring to FIGS. 1 to 4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, including, for example, a positive electrode tab 71 and a negative electrode tab 72, serving as an electrical path for inducing the current formed in the electrode assembly 40 to the outside.

### Negative Electrode

The negative electrode for a rechargeable lithium battery includes a negative electrode current collector and a negative electrode active material layer on the negative electrode current collector. The negative electrode active material layer includes a negative electrode active material and may further include a binder and/or a conductive material.

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous carbon, and/or a combination thereof as a carbon-based negative electrode active material. The crystalline carbon may be irregular, sheet shaped, flake shaped, spherical shaped, and/or fiber shaped (e.g., in a form of fibers), natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a combination thereof), and/or a combination thereof. The Sn-based negative electrode active material may be Sn, SnOx (0 < x ≤ 2) (e.g., SnO₂), a Sn-based alloy, and/or a combination thereof.

The silicon-carbon composite may be a composite of silicon and amorphous carbon. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material and/or Sn-based negative electrode active material may be mixed with the carbon-based negative electrode active material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder serves to suitably adhere the negative electrode active material particles to each other and also to adhere the negative electrode active material to the current collector. The binder may be a non-aqueous binder, an aqueous binder, a dry binder, and/or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, and/or a combination thereof.

The conductive material (e.g., electron conductor) is included to provide electrode conductivity and any suitable electrically conductive material may be used as a conductive material unless it causes an undesirable chemical change in the battery. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a mixture thereof.

The negative electrode current collector may be selected from among a copper foil, a nickel foil, a stainless steel foil, a titanium foil, a nickel foam, a copper foam, a polymer substrate coated with a conductive metal, and/or a combination thereof.

### Electrolyte Solution

The electrolyte solution for a rechargeable lithium battery may include a non-aqueous organic solvent and a lithium salt.

The non-aqueous organic solvent serves as a medium for transmitting ions taking part in the electrochemical reaction of a battery.

The non-aqueous organic solvent may include a carbonate-based solvent, an ester-based solvent, an ether-based solvent, a ketone-based solvent, an alcohol-based solvent, an aprotic solvent, and/or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like, and the aprotic solvent may include nitrile(s) such as R-CN (wherein R is a C2 to C20 linear, branched, or cyclic hydrocarbon group, a double bond, an aromatic ring, an ether bond, and/or the like); amide(s) such as dimethylformamide; dioxolane(s) such as 1,3-dioxolane, 1,4-dioxolane, and/or the like; sulfolane(s); and/or the like.

The non-aqueous organic solvent can be used alone or in a mixture of two or more types (kinds).

When using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables (e.g., helps facilitate) a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

### Separator

Depending on the type or kind of the rechargeable lithium battery, a separator may be present between the positive electrode and the negative electrode. The separator may include polyethylene, polypropylene, polyvinylidene fluoride, a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a combination thereof on a surface (e.g., one or both (e.g., simultaneously) surfaces (e.g., opposite surfaces)) of the porous substrate.

The porous substrate may be a polymer film formed of a (e.g., any one) polymer selected from among polyolefin (such as polyethylene and/or polypropylene), polyester (such as polyethylene terephthalate and/or polybutylene terephthalate), polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON^{™}), a copolymer of two or more thereof, and/or mixture of two or more thereof.

The organic material may include a polyvinylidene fluoride-based polymer and/or a (meth)acrylic-based polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

Herein below, examples and comparative examples of the present disclosure are described. However, the following examples are only examples of the present disclosure, and the present disclosure is not limited to the following examples.

### Example 1

### (1) Manufacturing of Positive Electrode

A first positive electrode active material having a composition of Li₁Ni_{0.88}Co_{0.1}Al_{0.02}O₂ in the form of secondary particles with an average particle diameter of about 17 µm, a second positive electrode active material having a composition of Li₁Ni_{0.83}Co_{0.15}Al_{0.02}O₂ in the form of secondary particles with an average particle diameter of about 6 µm, and a third positive electrode active material having a composition of Li₁Ni_{0.93}Co_{0.05}Al_{0.02}O₂ in the form of single particles with an average particle diameter of about 3 µm were mixed in a weight ratio of 70:10:20 to prepare a positive electrode active material.

97.7 wt% of the prepared positive electrode active material, 1.2 wt% of a binder polyvinylidene difluoride (PVDF), and 1.1 wt% of a conductive material CNT were mixed in an N-methyl-2-pyrrolidone (NMP) solvent to prepare a positive electrode composition. The prepared positive electrode composition was coated on an aluminium current collector. The coated current collector was dried and compressed to have electrode plate density of 3.65 g/cc, thus manufacturing a positive electrode laminated in the order of the current collector and a positive electrode active material layer. In the manufactured positive electrode, a thickness of the positive electrode active material layer is about 100 µm.

### (2) Manufacturing of Negative Electrode

97.3 wt% of graphite as a negative electrode active material, 0.5 wt% of denka black, 0.9 wt% of carboxymethyl cellulose, and 1.3 wt% of a styrene-butadiene rubber were mixed in an aqueous solvent to prepare negative electrode active material slurry. The prepared negative electrode active material slurry was coated on a copper foil, dried, and compressed to manufacture a negative electrode.

### (3) Manufacturing of Battery Cell

The manufactured positive electrode, a separator with a polyethylene/polypropylene multi-layer structure, and the manufactured negative electrode were sequentially stacked to manufacture a pouch-type or kind cell, and an electrolyte solution prepared by adding 1.0 M of LiPF₆ lithium salt to a solvent of ethylene carbonate and diethyl carbonate mixed in a volume ratio of 50:50 was injected thereinto to manufacture a rechargeable lithium battery cell.

### Example 2

A rechargeable lithium battery cell was manufactured substantially in the same manner as in Example 1 except that the composition of the first positive electrode active material was changed to Li₁Ni_{0.78}Co_{0.2}Al_{0.02}O₂, the composition of the second positive electrode active material was changed to Li₁Ni_{0.73}Co_{0.25}Al_{0.02}O₂, and the composition of the third positive electrode active material was changed to Li₁Ni_{0.83}Co_{0.15}Al_{0.02}O₂.

### Example 3

A rechargeable lithium battery cell was manufactured substantially in the same manner as in Example 1 except that the weight ratio of the first positive electrode active material, the second positive electrode active material, and the third positive electrode active material was changed to be 60:20:20 instead of 70:10:20.

### Example 4

A rechargeable lithium battery cell was manufactured substantially in the same manner as in Example 1 except that the weight ratio of the first positive electrode active material, the second positive electrode active material, and the third positive electrode active material was changed to be 80:5:15 instead of 70:10:20.

### Comparative Example 1

A rechargeable lithium battery cell was manufactured substantially in the same manner as in Example 1 except that the compositions of the first positive electrode active material, the second positive electrode active material, and the third positive electrode active material were all changed to Li₁Ni_{0.78}Co_{0.2}Al_{0.02}O₂.

### Comparative Example 2

A rechargeable lithium battery cell was manufactured substantially in the same manner as in Example 1 except that the composition of the first positive electrode active material was changed to Li₁Ni_{0.78}Co_{0.2}Al_{0.02}O₂, that of the second positive electrode active material was changed to Li₁Ni_{0.83}Co_{0.15}Al_{0.02}O₂, and that of the third positive electrode active material was changed to Li₁Ni_{0.73}Co_{0.25}Al_{0.02}O₂.

### Comparative Example 3

A rechargeable lithium battery cell was manufactured substantially in the same manner as in Comparative Example 1 except that the weight ratio of the first positive electrode active material, the second positive electrode active material, and the third positive electrode active material was changed to be 60:20:20 instead of 70:10:20.

### Comparative Example 4

A rechargeable lithium battery cell was manufactured substantially in the same manner as in Comparative Example 1 except that the weight ratio of the first positive electrode active material, the second positive electrode active material, and the third positive electrode active material was changed to be 80:5:15 instead of 70:10:20.

### Comparative Example 5

A rechargeable lithium battery cell was manufactured substantially in the same manner as in Example 2 except that the first positive electrode active material and the third positive electrode active material were mixed in a weight ratio of 70:30 without using the second positive electrode active material.

### Comparative Example 6

A rechargeable lithium battery cell was manufactured substantially in the same manner as in Comparative Example 2 except that the first positive electrode active material and the third positive electrode active material were mixed in a weight ratio of 70:30 without using the second positive electrode active material.

For better understanding, design details of the positive electrode active materials of the examples and the comparative examples are briefly provided in Table 1.

**Table 1**

| | Weight ratio | Cobalt content (mol%) | | |
|---|---|---|---|---|
| Example 1 | 70:10:20 | 10 | 15 | 5 |
| Example 2 | 70:10:20 | 20 | 25 | 15 |
| Example 3 | 60:20:20 | 10 | 15 | 5 |
| Example 4 | 80:5:15 | 10 | 15 | 5 |
| Comparative Example 1 | 70:10:20 | 20 | 20 | 20 |
| Comparative Example 2 | 70:10:20 | 20 | 15 | 25 |
| Comparative Example 3 | 60:20:20 | 20 | 20 | 20 |
| Comparative Example 4 | 80:5:15 | 20 | 20 | 20 |
| Comparative Example 5 | 70:0:30 | 20 | - | 15 |
| Comparative Example 6 | 70:0:30 | 20 | - | 25 |

### Evaluation Example 1: Deterioration Analysis due to Compression

The rechargeable lithium battery cells of the examples and the comparative examples were charged to an upper limit voltage of 4.3 V at a constant current of 0.2 C and discharged to a cut-off voltage of 3.0 V at 0.2 C at 25 °C for initial charge and discharge. Subsequently, the cells were 1000 times repeatedly charged and discharged at a rate of 1.0 C within a voltage range of 3.0 V to 4.3 V at 45 °C.

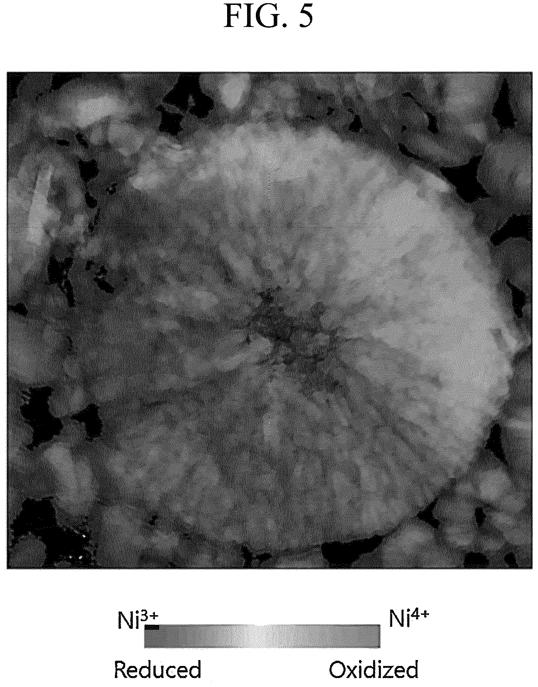

First, after 1000 cycles charging and discharging the cells of Example 1 and Comparative Examples 1, 5, and 6, each positive electrode was separated therefrom to perform a TXM (Transmission X-ray Microscopy) analysis on a cross-section of the positive electrode, and the results are shown sequentially in FIGS. 5 to 8. In FIGS. 5 to 8, the more there are reduced (red) regions representing Ni³⁺, the more the positive electrode active material was deteriorated. Referring to an image of the positive electrode cross-section of Example 1 of FIG. 5, the reduced (red) regions in the large particles are reduced, which confirmed that a phenomenon of breaking (of the large particles) by the compression was reduced.

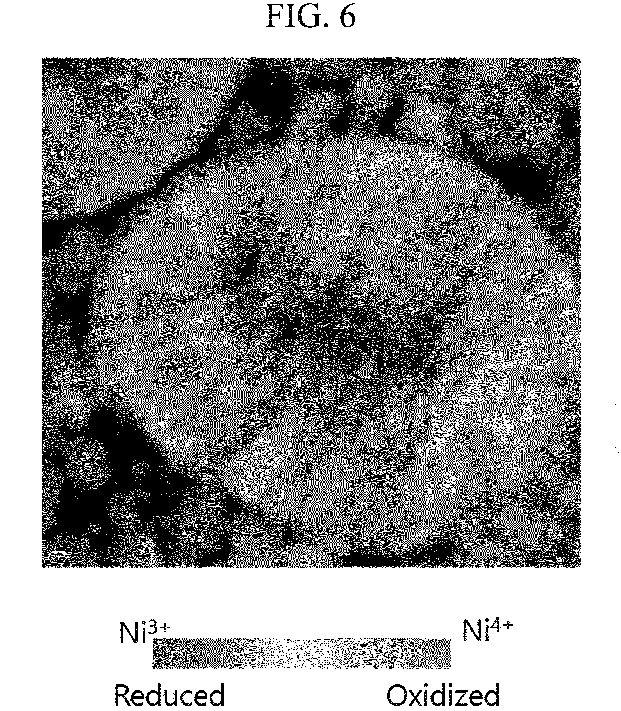

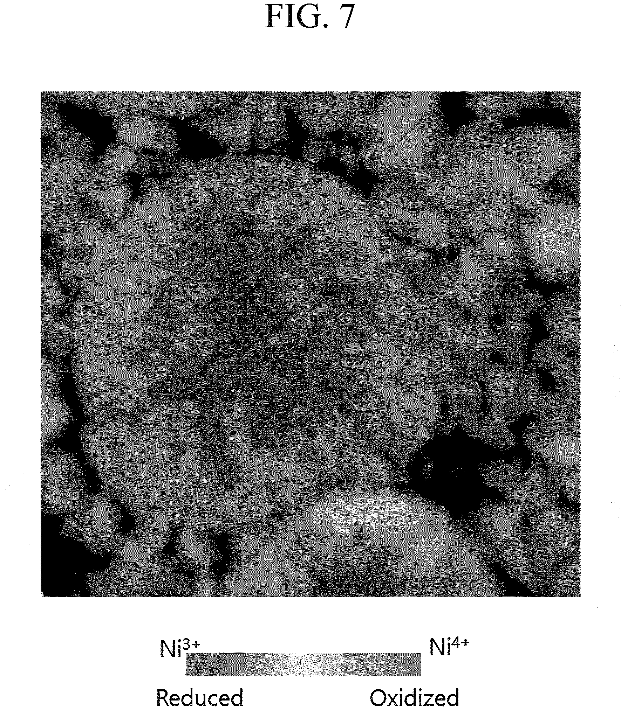

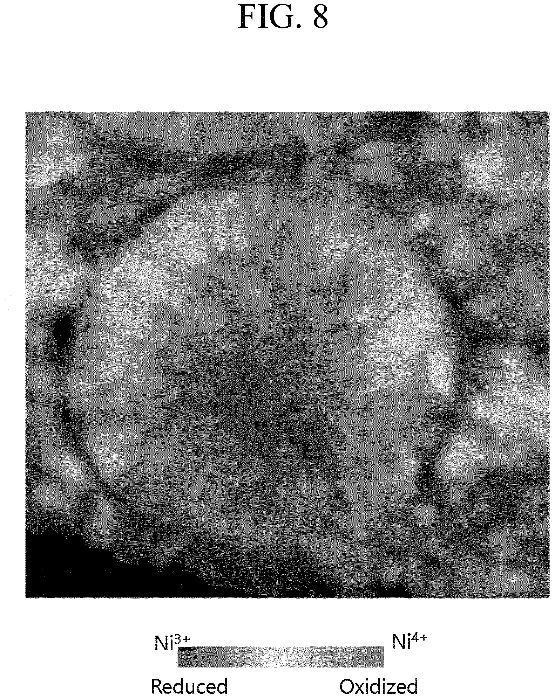

In contrast, FIG. 6 is an image of the positive electrode cross-section of Comparative Example 1, which shows more reduced (red) regions in the large particles in the form of secondary particles than in those of Example 1. In one or more embodiments, FIG. 7 is an image showing the positive electrode cross-section of Comparative Example 3, which shows more reduced (red) regions in the large particles in the form of secondary particles than in those of Example 1, and FIG. 8 is an image showing the positive electrode cross-section of Comparative Example 4, which shows lots of (e.g., substantial number of) reduced (red) regions in the large particles in the form of secondary particles due to reduction of nickel and accordingly, confirms a phenomenon of breaking and/or damage therein.

### Evaluation Example 2: Cycle-life Characteristics of Battery Cell

As in Evaluation Example 1, the rechargeable lithium battery cells of the examples and the comparative examples were 1000 cycles charged and discharged to calculate a ratio of 1000^{th} discharge capacity to initial discharge capacity, and the results are shown in Table 2.

**Table 2**

| | Capacity retention rate after 1000 cycles (%) | Cycle-life ranking |
|---|---|---|
| Example 1 | 93.1 | 1 |
| Example 2 | 91.9 | 2 |
| Example 3 | 85.2 | 5 |
| Example 4 | 82.5 | 7 |
| Comparative Example 1 | 87.9 | 3 |
| Comparative Example 2 | 85.5 | 4 |
| Comparative Example 3 | 84.8 | 6 |
| Comparative Example 4 | 82.0 | 8 |
| Comparative Example 5 | 72.6 | 10 |
| Comparative Example 6 | 73.5 | 9 |

Referring to Table 2, compared to Comparative Examples 5 and 6 including no neutral agent (e.g., no second positive electrode active material including middle-size particles), Examples 1 to 4 and Comparative Examples 1 to 4 each including the neutral agent exhibited improved cycle-life characteristics. In one or more embodiments, Examples 1 and 2, in each of which the second lithium nickel-cobalt-based composite oxide has a larger cobalt content mol% than the first lithium nickel-cobalt-based composite oxide, and the first lithium nickel-cobalt-based composite oxide has a larger cobalt content mol% than the third lithium nickel-cobalt-based composite oxide, exhibited improved cycle-life characteristics, compared to Comparative Examples 1 to 4. In one or more embodiments, Example 1 having a weight ratio of 70:10:20 among the first positive electrode active material, the second positive electrode active material, and the third positive electrode active material, compared to Examples 3 and 4 (which had a different weight ratio), exhibited improved cycle-life characteristics. This trend is further confirmed by showing that Comparative Example 1 (which had a weight ratio of 70:10:20) exhibited improved cycle-life characteristics as compared to Comparative Examples 3 and 4 (which had different weight ratios).

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

Embodiments are set out in the following clauses:
Clause 1. A positive electrode active material for a rechargeable lithium battery, comprising
   a first positive electrode active material including a first lithium nickel-cobalt-based composite oxide, in a form of secondary particles composed of a plurality of primary particles, and having an average particle diameter (D₅₀) of the secondary particles of about 10 µm to about 30 µm;
   a second positive electrode active material including a second lithium nickel-cobalt-based composite oxide, in a form of secondary particles composed of a plurality of primary particles, and having an average particle diameter (D₅₀) of the secondary particles of about 5 µm to about 9 µm; and
   a third positive electrode active material including a third lithium nickel-cobalt-based composite oxide, in a form of single particles, and having an average particle diameter (D₅₀) of the single particles of about 0.5 µm to about 4 µm,
   wherein the positive electrode active material satisfies Relationship Equation 1:

      **[Relationship Equation 1]** Co²>Co¹>Co³
   wherein, in Relationship Equation 1, Co¹ is a mol% content of cobalt based on 100 mol% of metals excluding lithium in the first lithium nickel-cobalt-based composite oxide, Co² is a mol% content of cobalt based on 100 mol% of metals excluding lithium in the second lithium nickel-cobalt-based composite oxide, and Co³ is a mol% content of cobalt based on 100 mol% of metals excluding lithium in the third lithium nickel-cobalt-based composite oxide.
Clause 2. The positive electrode active material of clause 1, wherein
   the first positive electrode active material is included in an amount of about 60 to about 90 wt% based on a total of 100 wt% of the first, second, and third positive electrode active materials.
Clause 3. The positive electrode active material of clause 1 or clause 2, wherein
   the second positive electrode active material is included in an amount of about 5 to about 20 wt% based on a total of 100 wt% of the first, second, and third positive electrode active materials.
Clause 4. The positive electrode active material of any one of clauses 1 to 3, wherein
   the third positive electrode active material is included in an amount of about 5 to about 20 wt% based on a total of 100 wt% of the first, second, and third positive electrode active materials.
Clause 5. The positive electrode active material of any one of clauses 1 to 4, wherein
   the Co² is about 1.1 times to about 2 times the Co¹.
Clause 6. The positive electrode active material of any one of clauses 1 to 5, wherein
   the Co¹ is about 1.1 times to about 3 times the Co³.
Clause 7. The positive electrode active material of any one of clauses 1 to 6, wherein
   the Co¹ is included in an amount of about 5 mol% to about 20 mol%.
Clause 8. The positive electrode active material of any one of clauses 1 to 7, wherein
   the Co² is included in an amount of about 10 mol% to about 30 mol%.
Clause 9. The positive electrode active material of any one of clauses 1 to 8, wherein
   the Co³ is included in an amount of about 1 mol% to about 15 mol%.
Clause 10. The positive electrode active material of any one of clauses 1 to 9, wherein
   the Co² is about 1 mol% to about 10 mol% more than Co¹.
Clause 11. The positive electrode active material of any one of clauses 1 to 10, wherein
   the Co¹ is about 1 mol% to about 10 mol% more than Co³.
Clause 12. The positive electrode active material of any one of clauses 1 to 11, wherein
   the positive electrode active material layer has a density of about 3.4 g/cc to about 3.9 g/cc.
Clause 13. The positive electrode active material of any one of clauses 1 to 12, wherein
   a cracked first positive electrode active material is about 0 to about 30 number% of the total first positive electrode active material in the positive electrode active material layer.
Clause 14. The positive electrode active material of any one of clauses 1 to 13, wherein
   a portion occupied by Ni³⁺ is about 1 area% to about 30 area% based on 100 area% of a total area of the cross-section of the positive electrode active material layer.
Clause 15. A positive electrode for a rechargeable lithium battery, comprising
   a positive electrode current collector, and a positive electrode active material layer on the positive electrode current collector,
   wherein the positive electrode active material layer includes the positive electrode active material for the rechargeable lithium battery of any one of clauses 1 to 14.
Clause 16. A method of manufacturing a positive electrode for a rechargeable lithium battery, comprising
   preparing a composition including about 60 to about 90 wt% of a first positive electrode active material, about 5 to about 20 wt% of a second positive electrode active material, and about 5 to about 20 wt% of a third positive electrode active material composition based on a total of 100 wt% of the first, second, and third positive electrode active materials;
   coating the composition on a current collector; and
   drying and then compressing;
   whereinthe first positive electrode active material includes a first lithium nickel-cobalt-based composite oxide, is in a form of secondary particles composed of a plurality of primary particles, and has an average particle diameter (D₅₀) of the secondary particles of about 10 µm to about 30 µm, a second positive electrode active material includes a second lithium nickel-cobalt-based composite oxide, is in a form of secondary particles composed of a plurality of primary particles, and has an average particle diameter (D₅₀) of the secondary particles of about 5 µm to about 9 µm, the third positive electrode active material includes a third positive electrode active material including a third lithium nickel-cobalt-based composite oxide, is in a form of single particles, and has an average particle diameter (D₅₀) of the single particles of about 0.5 µm to about 4 µm, and the positive electrode active material satisfies Relationship Equation 1:

      **[Relationship Equation 1]** Co²>Co¹>Co³
   wherein, in Relationship Equation 1, Co¹ is a mol% content of cobalt based on 100 mol% of metals excluding lithium in the first lithium nickel-cobalt-based composite oxide, Co² is a mol% content of cobalt based on 100 mol% of metals excluding lithium in the second lithium nickel-cobalt-based composite oxide, and Co³ is a mol% content of cobalt based on 100 mol% of metals excluding lithium in the third lithium nickel-cobalt-based composite oxide.
Clause 17. A rechargeable lithium battery, comprising
   the positive electrode for the rechargeable lithium battery of clause 15;
   a negative electrode; and
   an electrolyte solution.

### Reference Numerals

| | | | |
|---|---|---|---|
| 100: | rechargeable lithium battery | 10: | positive electrode |
| 11: | positive electrode lead tab. | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material for a rechargeable lithium battery comprising:
a first positive electrode active material comprising a first lithium nickel-cobalt-based composite oxide, the first lithium nickel-cobalt-based composite oxide being in a form of secondary particles composed of a plurality of primary particles and having an average particle diameter (D₅₀) of the secondary particles of about 10 µm to about 30 µm;
a second positive electrode active material comprising a second lithium nickel-cobalt-based composite oxide, the second lithium nickel-cobalt-based composite oxide being in a form of secondary particles composed of a plurality of primary particles and having an average particle diameter (D₅₀) of the secondary particles of about 5 µm to about 9 µm; and
a third positive electrode active material comprising a third lithium nickel-cobalt-based composite oxide, the third lithium nickel-cobalt-based composite oxide being in a form of single particles and having an average particle diameter (D₅₀) of the single particles of about 0.5 µm to about 4 µm,
wherein the positive electrode active material satisfies Relationship Equation 1:
**Relationship Equation 1** Co²>Co¹>Co³,
in Relationship Equation 1, Co¹ is a mol% content of cobalt based on 100 mol% of metals excluding lithium in the first lithium nickel-cobalt-based composite oxide, Co² is a mol% content of cobalt based on 100 mol% of metals excluding lithium in the second lithium nickel-cobalt-based composite oxide, and Co³ is a mol% content of cobalt based on 100 mol% of metals excluding lithium in the third lithium nickel-cobalt-based composite oxide.

2. The positive electrode active material as claimed in claim 1, wherein
the first positive electrode active material is in an amount of about 60 to about 90 wt% based on a total of 100 wt% of the first, second, and third positive electrode active materials.

3. The positive electrode active material as claimed in claim 1 or claim 2, wherein
the second positive electrode active material is in an amount of about 5 to about 20 wt% based on a total of 100 wt% of the first, second, and third positive electrode active materials.

4. The positive electrode active material as claimed in any one of claims 1 to 3, wherein
the third positive electrode active material is in an amount of about 5 to about 20 wt% based on a total of 100 wt% of the first, second, and third positive electrode active materials.

5. The positive electrode active material as claimed in any one of claims 1 to 4, wherein
the Co² is about 1.1 times to about 2 times larger than the Co¹.

6. The positive electrode active material as claimed in any one of claims 1 to 5, wherein
the Co¹ is about 1.1 times to about 3 times larger than the Co³.

7. The positive electrode active material as claimed in any one of claims 1 to 6, wherein
the Co¹ is in an amount of about 5 mol% to about 20 mol% based on 100 mol% of metals excluding lithium in the first lithium nickel-cobalt-based composite oxide.

8. The positive electrode active material as claimed in any one of claims 1 to 7, wherein
the Co² is in an amount of about 10 mol% to about 30 mol% based on 100 mol% of metals excluding lithium in the second lithium nickel-cobalt-based composite oxide.

9. The positive electrode active material as claimed in any one of claims 1 to 8, wherein
the Co³ is in an amount of about 1 mol% to about 15 mol% based on 100 mol% of metals excluding lithium in the third lithium nickel-cobalt-based composite oxide.

10. The positive electrode active material as claimed in any one of claims 1 to 9, wherein
the Co² is about 1 mol% to about 10 mol% more than Co¹.

11. The positive electrode active material as claimed in any one of claims 1 to 10, wherein
the Co¹ is about 1 mol% to about 10 mol% more than Co³.

12. A positive electrode for a rechargeable lithium battery comprising:
a positive electrode current collector, and a positive electrode active material layer on the positive electrode current collector,
wherein the positive electrode active material layer comprises the positive electrode active material as claimed in any one of claims 1 to 11.

13. The positive electrode as claimed in claim 12, wherein:
(i) the positive electrode active material layer has a density of about 3.4 g/cc to about 3.9 g/cc; and/or
(ii) the first positive electrode active material comprises a cracked portion, and the cracked portion of the first positive electrode active material is about 0 to about 30 number% based on 100 number% of a total first positive electrode active material comprised in the positive electrode active material layer; and/or
(iii) a portion occupied by Ni³⁺ is about 1 area% to about 30 area% based on 100 area% of a total area of a cross-section of the positive electrode active material in the positive electrode active material layer

14. A method of manufacturing a positive electrode for a rechargeable lithium battery, the method comprising:
preparing a composition comprising about 60 to about 90 wt% of a first positive electrode active material, about 5 to about 20 wt% of a second positive electrode active material, and about 5 to about 20 wt% of a third positive electrode active material composition based on a total of 100 wt% of the first, second, and third positive electrode active materials;
coating the composition on a current collector; and
drying and then compressing;
wherein:
the first positive electrode active material comprises a first lithium nickel-cobalt-based composite oxide, the first lithium nickel-cobalt-based composite oxide being in a form of secondary particles composed of a plurality of primary particles and having an average particle diameter (D₅₀) of the secondary particles of about 10 µm to about 30 µm,
the second positive electrode active material comprises a second lithium nickel-cobalt-based composite oxide, the second lithium nickel-cobalt-based composite oxide being in a form of secondary particles composed of a plurality of primary particles and having an average particle diameter (D₅₀) of the secondary particles of about 5 µm to about 9 µm,
the third positive electrode active material comprises a third lithium nickel-cobalt-based composite oxide, the third lithium nickel-cobalt-based composite oxide being in a form of single particles and having an average particle diameter (D₅₀) of the single particles of about 0.5 µm to about 4 µm, and
the positive electrode active material satisfies Relationship Equation 1:
**Relationship Equation 1** Co²>Co¹>Co³,
in Relationship Equation 1, Co¹ is a mol% content of cobalt based on 100 mol% of metals excluding lithium in the first lithium nickel-cobalt-based composite oxide, Co² is a mol% content of cobalt based on 100 mol% of metals excluding lithium in the second lithium nickel-cobalt-based composite oxide, and Co³ is a mol% content of cobalt based on 100 mol% of metals excluding lithium in the third lithium nickel-cobalt-based composite oxide.

15. A rechargeable lithium battery, comprising:
the positive electrode as claimed in claim 12 or claim 13;
a negative electrode; and
an electrolyte.
